# EUROPÄISCHE PATENTSCHRIFT

(11) **EP 0 923 835 B1**
(45) Veröffentlichungstag und Bekanntmachung des Hinweises auf die Patenterteilung: **20.07.2005**
(21) Anmeldenummer: 97906080.3
(22) Anmeldetag: 20.03.1997
(51) Int. Cl.: H04M 3/30

(54) **VERFAHREN ZUM ÜBERWACHEN UND PRÜFEN VON ANSCHLÜSSEN EINES ISDN-FERNMELDENETZES**
METHOD FOR MONITORING AND CHECKING SUBSCRIBER CONNECTIONS TO ISDN
PROCEDE DE SURVEILLANCE ET DE VERIFICATION DES RACCORDEMENTS D'UN RESEAU RNIS DE TELECOMMUNICATION

(30) Priorität: 27.08.1996 CH 210196
(43) Veröffentlichungstag der Anmeldung: 23.06.1999
(73) Patentinhaber: Siemens Schweiz AG, 8047 Zürich (CH)
(72) Erfinder: NUSSBAUMER, Iwan, CH-4254 Liesberg-Dorf (CH); THIMM, Jürg, CH-3074 Muri (CH); ZEHNDER, Charles, CH-4102 Binningen (CH)
(74) Vertreter: Kley, Hansjörg
(86) Internationale Anmeldenummer: PCT/CH1997/000116
(87) Internationale Veröffentlichungsnummer: WO 1998/009420

(56) Entgegenhaltungen:
- EP-A- 0 603 692
- EP-A- 0 661 859
- EP-A- 0 710 045
- INTERNATIONAL CONFERENCE ON COMMUNICATIONS, ICC-87, SESSION 38, PAPER 6, Bd. 3, 10.Juni 1987, SEATTLE US, Seiten 1-5, XP002006268 KUZYSZYN S M ET AL: "ISDN PROTOCOL AND SERVICE VERIFICATION AND PERFORMANCE TESTING"
- PROCEEDINGS OF THE REGION 10 CONFERENCE ON COMPUTER AND COMMUNICATION SYSTEMS (TENCON), Bd. 2, 24. - 27.September 1990, HONG KONG, Seiten 865-868, XP000235993 CHI KUO-JAY: "ISDN-PAS: AN ISDN PERFORMANCE ANALYSIS SYSTEM"
- INTERNATIONAL SYMPOSIUM ON SUBSCRIBER LOOPS AND SERVICES (ISSLS), Nr. SYMP. 7, 29.September 1986 - 3.Oktober 1986, TOKYO, Seiten 123-128, XP000067747 BAUGHAN K ET AL: "CCITT STANDARDS FOR THE ISDN DATA LINK LAYER"

## Beschreibung

Die vorliegende Erfindung betrifft ein Verfahren nach dem Oberbegriff des Patentanspruchs 1.

Betreiber von Kommunikationsnetzwerken sind aus Aufwand- und Kostengründen immer mehr an einem zentralen Netzmanagement interessiert. Konkret besteht die Forderung, das ganze Netz einschliesslich der Netzabschlüsse von zentraler Stelle aus verwalten (insbesondere Überwachen und Prüfen) zu können. So sollen beispielsweise Störungen an einem Teilnehmeranschluss (Anschluss für ein an sich beliebiges Endgerät) des Netzwerkes von einer zentralen Stelle aus schnell und kostengünstig festgestellt und behoben werden. Voraussetzung dafür ist, dass die Anschlüsse beliebig übewacht und hinsichtlich bestimmter Eigenschaften geprüft werden können, um dann allenfalls erforderliche Massnahmen rasch einzuleiten (Remote Support).

Im Dokument «ISDN Protocol and Service Verification and Performance Testing» von Bell Communications Reserach, Inc der Autoren Steve M. Kuzyszyn und Kun I. Park wird ein Verfahren zum Protokolltest vorgeschlagen, das folgende Infrastruktur erfordert: Von einem zentralen Host-Rechner in einem ISDN-Fernmeldenetz werden Prüfprogramme zu peripheren Testeinheiten heruntergeladen. Mit diesen Prüfprogrammen werden von den peripheren Testeinheiten eigenständig Tests durchgeführt und die Ergebnisse zu einem späteren Zeitpunkt an den Host-Rechner übertragen. Dieses Verfahren ist zwar sehr umfassend, erfordert jedoch einen hohen Infrastrukturaufwand; insbesondere spezielle periphere Tesieinheiten.

Der vorliegenden Erfindung liegt daher die Aufgabe zugrunde, ein Verfahren anzugeben, mit dem von einem beliebigen Anschluss eines ISDN-Fernmeldenetzes aus auf andere ISDN-Anschlüsse zugegriffen und deren Verhalten überwacht sowie geprüft werden kann.

Diese Aufgabe wird durch die im Patentanspruch 1 angegebenen Massnahmen gelöst. Vorteilhafte Ausgestaltungen der Erfindung sind in weiteren Ansprüchen angegeben.

Das erfindungsgemässe Verfahren bietet folgende Vorteile: Beliebige Teilnehmeranschlüsse eines ISDN-Fernmeldenetzes lassen sich ortsunabhängig, d.h. von einem beliebigen anderen ISDN-Anschluss netzübergreifend überwachen und prüfen. Die Prüfstation kann am nächstliegenden ISDN-Anschluss installiert werden und damit rasch auf einen beliebigen entfernten ISDN-Anschluss zugreifen. In vielen Fällen ist es daher nicht mehr notwendig, einen Anschluss vor Ort zu überwachen und zu prüfen, was für den Netzbetreiber weniger aufwendig und somit für den Kunden kostengünstiger ist. Der Zugriff auf beliebige Teilnehmeranschlüsse erlaubt insbesondere eine rasche und effiziente Fehlerlokatisierung und Fehlerbehebung von einem beliebigen Teilnehmeranschluss des Fernmeldenetzes aus.

Die Erfindung wird nachfolgend anhand einer Zeichnung beispielsweise näher erläutert. Dabei zeigt :
- Fig. 1: ein Fernmeldenetz, in dem das erfindungsgemässe Verfahren anwendbar ist;
- Fig. 2: das Blockschaltbild einer Antwortstation zur Durchführung des erfindungsgemässen Verfahrens;
- Fig.3: weitere Einzelheiten der Antwortstation.

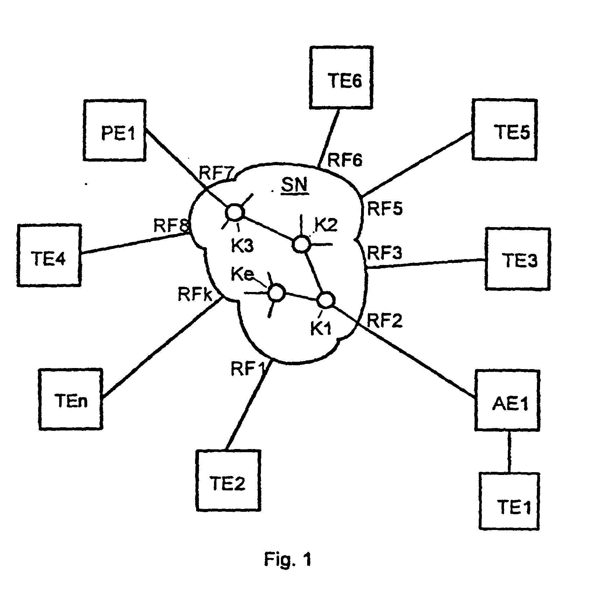

Fig. 1 zeigt ein Femmeldenetz bestehend aus einem Vermittlungsnetz SN und verschiedenen über Referenzpunkte RF und nicht gezeichnete Netzabschlüsse (Network Termination NT) an das Vermitttungsnetz SN angeschlossenen Endgeräten TE2 ..... TEn. Über einen Referenzpunkt RF7 ist femer eine Prüfstation PE1 angeschlossen. Weiter ist über einen Referenzpunkt RF2 eine Antwortstation AE1 angeschlossen, an die noch das Endgerät TE1 angeschlossen ist. Beim Vermittlungsnetz SN handelt es sich um ein nach ISDN- Normen aufgebautes Netz, an das an den Referenzpunkten RF vorgesehenen Teilnehmeranschlüssen (Basisanschlüsse = Basic Channel) an sich beliebige Endgeräte angeschlossen werden können, wie beispielsweise Fernsprechapparate, Terminaladapter usw. Das Vermittlungsnetz SN kann in bekannter Weise aus Netzknoten K1 bis Ke bestehen, die Femmeldezentralen entsprechen und über Leitungsbündel miteinander verbunden sind.

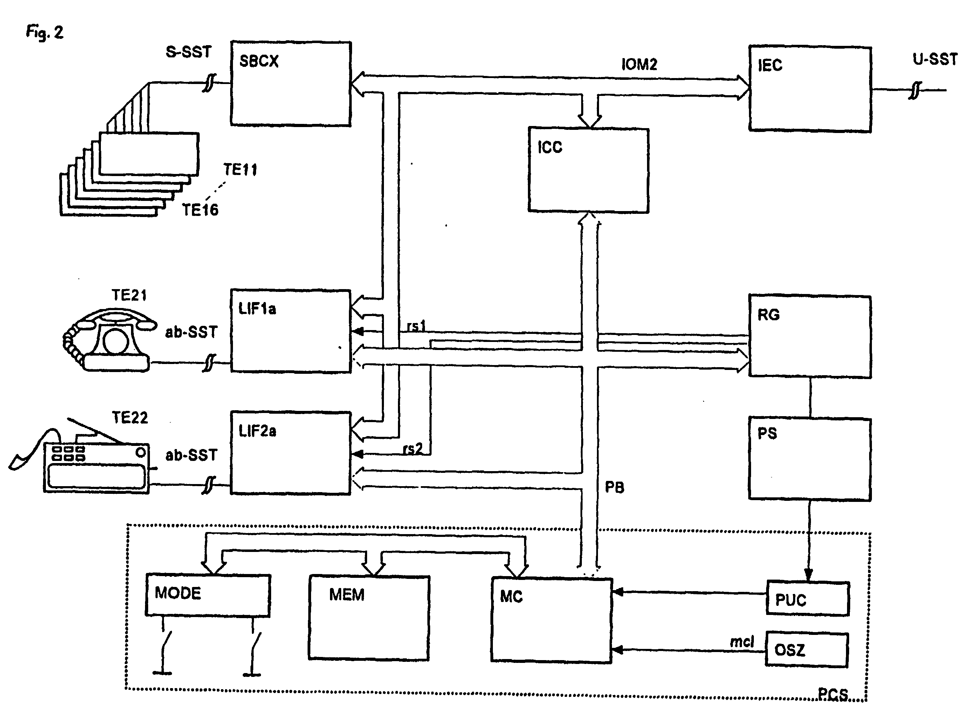

Fig. 2 zeigt ein aus der EP 0 668 706 A2 bekanntes Netzabschlussgerät, das mit weiter unten erläuterten zusätzlichen speziellen Funktionen als Antwortstation für die Durchführung des erfindungsgemässen Verfahrens eingesetzt werden kann. Zur Durchführung des Verfahrens ist es jedoch nicht notwendig, eine Antwonstation zu verwenden, die auch Netzabschlussfunktionen aufweist. Geht man jedoch davon aus, dass heute noch an vielen Anschlüssen eines digitalen Fernmetdenetzes ein Netzabschluss mit nur digitalen oder mit sowohl analogen als auch digitalen Schnittstellen vorzusehen ist, ist es vorteilhaft die Funktionen für Netrabschluss und Antwortstation wie im hier beschriebenen Beispiel in einem Gerät zuammenzulegen. Damit erhält der Benutzer gleichzeitig mit dem Netzabschluss auch die notwendigen Mittel, damit erfindungsgemäss auf seinen Anschluss zugegriffen werden kann.

Das In Fig.2 dargestellte Gerät weist zwei getrennte Bussysteme IOM2 (2B+D-Kanal-Bus) und PB (Prozessorbus) auf. Über dieses Gerät sind analoge Teilnehmerendgeräte TE sowie bis zu sechs digitale Teilnehmerendgeräte TE11 ... TE16 über eine U-Schnittstelle des ISDN-Femmeldenetzes mit einer Vermittlungszentrale verbindbar. Das erste Bussystem IOM2 verbindet eine mit der U-Schnittstelle verbundene Echokompensationsbaugruppe IEC mit einer Kommunikationssteuerung ICC sowie mit einer S-Schnittstellenbaugruppe SBCX und zwei ab-Schnittstellen-Baugruppen LIF1a bzw. LIF2a. Die S-Schnittstellenbaugruppe SBCX ist Ober eine S-Schnittstelle mit den digitalen Endgeräten TE11 ... TE16 und die ab-Schnittstellen-Baugruppen LIF1a bzw. UF2a sind je mit einem analogen Endgerät TE21 bzw. TE22 verbunden. Das Endgerät TE22 ist z.B. ein Femkopierer (Faxgerät). Das zweite Busssystem PB verbindet die Kommunikationssteuerung ICC, einen Rufsignalgenerator RG und die ab-Schnittstellen-Baugruppen LIF1a bzw. UF2a mit einem Prozessorsystem PCS, welches einen Prozessor MC, eine Speicherbaugruppe MEM, einen Oszillator OSZ sowie eine zur Einstellung der Betriebsart vorgesehene Schalteinheit MODE umfasst. Ferner ist der Prozessor MC zur Stromversorgung über einen Powet-up-Controller PUC mit der Stromversorgungseinheit PS verbunden. Durch den Power-up-Controller PUC wird dem Prozessor MC der Status der Versorgungsspannung signalisiert, damit rechtzeitig die notwendigen Ein- und Abschalt- (Power-up, Power-down) - Routinen durchgeführt werden können. Für den Notbetrieb, beim Ausfall der lokalen Stromversorgung, ist es vielfach zwingend notwendig, dass der Stromverbrauch der Schaltungsanordnung stark reduziert wird. In diesem Fall erfolgt die Speisung durch die zugeordnete Femmeldezentrale. Dazu wird vorgesehen, dass nur eines der (analogen oder digitalen) Endgeräte TE11, ..., TE22 in Betrieb genommen wird. Falls z.B. eines der analogen Endgeräte TE21; TE22 aktiviert wird, werden durch den Prozessor MC alle weiteren nicht benötigten Module in einen Power-down-Modus (Modus mit minimalem Leistungverbrauch) versetzt bzw. es werden nur die benötigten Module aus dem Power-down-Modus In den betriebsfähigen Zustand gebracht.

Die über eine Zweidrahtleitung mit der zugeordneten Fernmeldezentrale verbundene Echokompensationsbaugruppe IEC ermöglicht die Übertragung von Daten im Gleichlageverfahren (siehe Dr. H. E. Martin, Kommunikation mit ISDN, Markt & Technik Verlag, München 1988, Seite 105, Bild 6.15). Die übertragenen Daten sind dabei standardmässig einem von zwei digitalen Sprachkanälen (B-Kanäle) und einem digitalen Signalisierungskanal (D-Kanal) zugeordnet. Die Ober den D-Kanal übermittelten Signalisierungsdaten werden von der Kommunikationssteuerung ICC an den Prozessor MC übermittelt und von diesem ausgewertet. Die Kommunikationssteuerung ICC (ISDN Communication Controller: z.B. PEB 2070, hergestellt von Siemens AG) erbringt die D-Kanal-Verbindungsfunktionen bzw. ist für die Implementierung des D-Kanalprotokolls vorgesehen. Femer hat der Prozessor MC Ober die Kommunikationssteuerung ICC und den IOM-2-Bus Zugriff zur Echokompensationsbaugruppe IEC und zur Baugruppe SBCX, die vom Prozessor MC entsprechend den vorliegenden Konfigurationsdaten programmiert werden. Durch die vom Prozessor MC gesteuerte Kommunikationssteuerung ICC werden die B-Kanäle zudem entweder zur Baugruppe SBCX oder zu den ab-Schnittstellen-Baugruppen LIF1a bzw. UF2a durchgeschaltet. Falls beide B-Kanäle bereits von der Baugruppe SBCX besetzt sind, kann kein Freiton an die Baugruppe LIF1a bzw. LIF2a durchgeschaltet werden. Für diesen Fall wird ein intem erzeugter Gassenbesetztton (z.B. 425 Hz) an die ab-Schnittstellen-Baugruppe LIF1a bzw. LIF2a angelegt. Vorzugsweise werden vom Prozessor MC z.B. im 8 kHz-Takt Interrupt-Signale an die Kommunikationssteuerung ICC abgegeben, wonach mit jedem Interrupt ein Abtastwert des Gassenbesetzttones Ober das erste Bussystem IOM2 an die sb-Schnittstellen-Baugruppe LIF1a bzw. UF2a abgegeben wird. Auf diese Weise lassen sich weitere Töne (z.B. der Freiton) an die ab-Schnittstellen-Baugruppe LIF1a bzw. LIF2a abgeben. Der Gassenbesetztton, Gebührenimpulse oder weitere Töne lassen sich grundsätzlich jedoch beliebig, d.h. softwaremässig oder durch Teilung aus einer Referenzfrequenz, erzeugen.

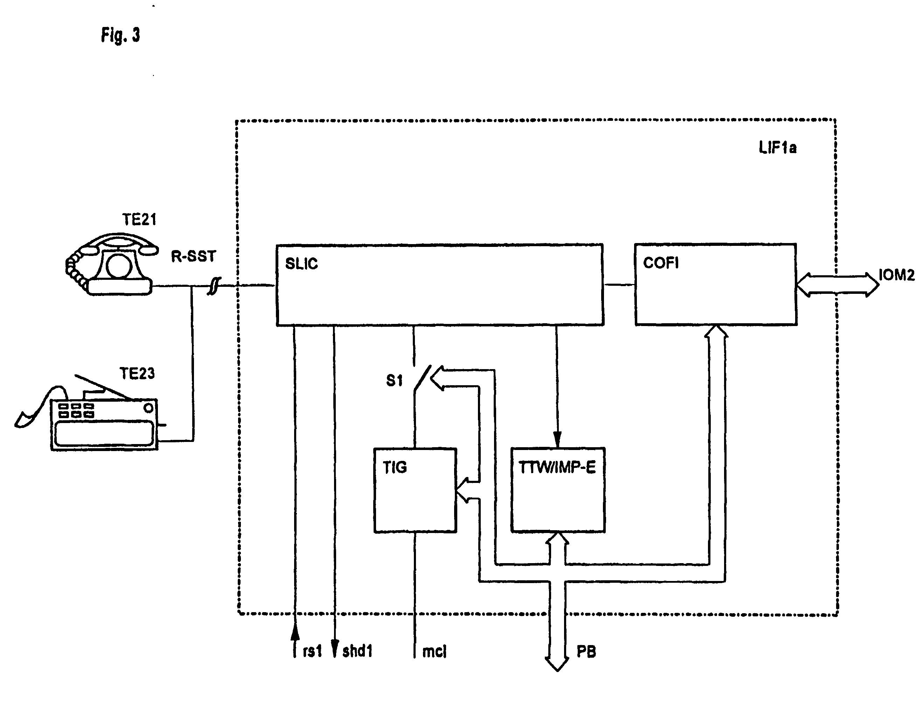

Die in Fig. 3 gezeigte, mit dem analogen Endgerät TE21 und gegebenenfalls mit einem weiteren, parallel dazu vorgesehenen Endgerät TE23 (z.B. Faxgetat der Gruppe 3) verbundene Baugruppe LIF1a weist eine Wandlerbaugruppe COFI auf, die einerseits mit dem IOM2-Bus und andererseits Ober eine Leitungsbaugruppe SLIC und die ab-Schnittstelle ab-SST mit dem Endgerät TE21 verbunden ist. Die Wandlerbaugruppe COFI dient in Richtung Endgerät als Digital/Analog- und in Richtung zum ISDN als Analog/Digital-Wandler. Die Leitungsbaugruppe SUC ist femer mit einem Rufspannungsgenerator RG (s. Leitungen rs1, rs2), einem Tontasten- und Impulswahl-Empfänger TTW/IMP-E sowie über einen Schalter S1 mit einem Gebührenimpuls-Generator TIG verbunden, dem vom Oszillator OSZ ein Referenzfrequenzsignal md zugeführt wird. Der Schalter S1, der Gebührenimpuls-Generator TIG, der Rufspannungsgenerator RG und der Tontasten- und Impulswahl-Empfänger TTW/IMP-E sind für Steuerzwecke bzw. für den Datenverkehr über den Prozessorbus PB mit dem Prozessor MC verbunden. Durch den Prozessor MC wird dabei das Teilungsverhältnis des mit dem Oszillator OSZ verbundenen Gebührenimpuls-Generators TIG festgelegt. Aus dem vom Oszillator OSZ zugeführten Referenzfrequenzsignal mcl wird durch entsprechende Teilung für die Gebührenimpulse eine Frequenz f1 (z.B. 12 kHz) erzeugt. Die Gebührenimpulse können, nebst durch Teilung aus einer Hauptfrequenz, auch softwaremässig generiert werden. Durch die Betätigung des Schalters S1 (Schalter S2 für Baugruppe LIF2a ist nicht dargestellt) werden die entsprechenden Signale der Leitungsbaugruppe SUC zugeführt. Vom Tontasten- und Impulswahl-Empfänger TTW/IMP-E werden die vom Endgerät TE21 erzeugten Wählsignale über den Prozessorbus PB dem Prozessor MC zugeführt. Der Tontasten- und Impulswahl-Empfänger TTW/IMP-E lässt sich dabei wahlweise Software- oder hardwaremässig realisieren. Der Aufbau der Verbindung erfolgt, falls ein freier B-Kanal vorhanden ist, in Zusammenarbeit zwischen dem Prozessor MC und der Kommunikationssteuerung ICC. Falls das analoge Endgerät TE21 bzw. TE22 über Sondenasten (z.B. # (Raute) und/oder * (Stem)) verfügt, können vom Endgerät TE21 bzw. TE22 Instruktionen an den Prozessor MC übertragen werden. Beispielsweise können dem Prozessor MC die Rufnummern der ab-Schnittstellen, der Gerätetyp mit der HLC (High Layer Compatibility) Information und die gewünschte Notbetriebsart (Notbetrieb über ab- oder S-Schnittstelle oder kein Notbetrieb) angegeben oder Testsequenzen aufgerufen werden.

Die Leitungsbaugruppe SLIC erfüllt die klassischen BORSCHT-Funktionen (Teilnehmer-Speisung, Überspannungsschutz, Ruf-Steuerung, Schleifenüberwachung und Signalisierung) mit Ausnahme der Analog/Digital-Wandlung (Coding), die In der Wandierbaugruppe COFI ausgeführt wird. Durch die Schleifenüberwachung wird beim Abheben des Hörers über den Prozessorbus PB oder eine separate Leitung ein Meidesignel shd1 (switch hook detection) an den Prozessor MC abgegeben. Der Leitungsbaugruppe SLIC folgt die Wandlemaugruppe COFI (Codec Falter), die zur Umwandlung des analogen Teilnehmersignals In ein PCM-Digitalsignal und umgekehrt sowie zur Bandbreitenbegnenzung und Filterung dient. Frequenzgang, Impedanzanpassung und Verstärkung/Dämpfung dieser Baugruppe sind In bevorzugten Ausführungsformen durch den Prozessor MC programmierbar.

Das IOM2-Bussystem besteht aus einer Bittakt- und einer Frametakt- sowie zwei Datenleitungen, von denen jede für den Datenverkehr In eine Richtung vorgesehen ist. Die dem Fachmann bekannte IOM-Schnittstelle wird z.B. In A. Kanbach / A. Körber, ISDN - Die Technik, Hüthig Verlag, Heidelberg 1990, auf Seiten 260 - 266 beschrieben. Vorzugsweise wird für das erste Bussystem IOM2 die IOM2-Schnittstelle (IOM Revision 2) verwendet, die als Weiterentwicklung aus der IOM1 - Schnittstelle entstand. Besonders vorteilhaft bei dieser Schnittstelle ist, dass informationen der mit dem IOM2-Bussystem verbundenen Bausteine untereinander ausgetauscht werden können, ohne dass die B-Kanäle in Anspruch genommen werden.

Die Echokompensationsbaugruppe IEC und die S-Schnittstellen-Baugruppe SBCX lassen sich durch die handelsüblichen Bausteine Siemens PEB 2091 (U-Schnittstellen-Baustein) bzw. Siemens PEB 2081 (S-Schnittstellen-Baustein) realisieren.

Zur Vermeidung von Kollisionen im D-Kanal, die auftreten, wenn die digitalen Endgeräte TE11, ..., TE16 gleichzeitig einen Verbindungsaufbau initialisieren, ist die bekannte D-Kanal Zugriffssteuerung vorgesehen, wie sle in A. Kanbach / A. Körber, ISDN - Die Technik, Hüthig Vertag, Heidelberg 1990, auf Seiten 105 - 109 beschrieben ist.

Zur Vermeidung von Kollisionen im D-Kanal, die auftreten, wenn digitale und analoge Endgeräte TE11, ..., TE16 und TE21, ..., TE24 gleichzeitig einen Verbindungsaufbau initialisieren, sind folgende Massnahmen vorgesehen: Grundsätzlich kann jeweils nur ein einziges Endgerät TE auf den D-Kanal zugreifen. Dies wird durch eine für jedes Endgerät TE verwendete Kollisions-Erttennung erreicht, die durch Reflexion der gesendeten Signalisierungsdaten in einem Echo-Kanal ermöglicht wird. Zur Vermeidung von Kollisionen beim Verbindungsaufbau für ein analoges Endgerät TE21 oder TE22 überwacht die S-Schnittstellenbaugruppe SBCX die auf dem D-Kanal eintreffenden Daten. Beim Eintreffen eines D-Kanal-requests (Anfrage zur Zugriffserlaubnis) von der Kommunikationssteuerung ICC gibt die S-Schnittstellenbaugruppe SBCX der Kommunikationssteuerung ICC die Berechtigung auf den D-Kanal zuzugreifen, falls sie den D-Kanal selbst nicht benutzt. Gleichzeitig werden durch die S-Schnittstellenbaugruppe SBCX alle digitalen Endgeräte TE11, ..., TE16 daran gehindert, auf den D-Kanal zuzugreifen. Dies geschieht, indem der E-Kanal (Echo-Kanal) auf Null gesetzt wird. Die Kommunikationssteuerung ICC ist daher in der Lage, einen HDLC-Rahmen an den D-Kanal abzugeben, ohne dass eine Kollision auftritt. Aufgrund der von der Kommunikationssteuerung ICC abgegebenen Signalisierungsdaten wird ein Verbindungsaufbau für die analogen Endgeräte ermöglicht, wie er z.B. in A. Kanbach / A. Körber, ISDN - Die Technik, Hüthig Verlag, Heidelberg 1990, auf Seiten 73 - 75 beschrieben ist.

Jeder Anschluss des in Fig.1 gezeigten Femmeldenetzes, auf den erfindungsgemäss zugegriffen bzw. der erfindungsgemäss von einer Prüfstation PE1 (Fig.1) aus überwacht und geprüft werden soll, muss mit einer Antwortstation AE ausgerüstet sein, die die nachstehend beschriebenen Funktionen beherrscht. Diese Funktionen lassen sich durch entsprechende Programmierung des Prozessors MC und der Kommunikationssteuerung ICC in das beschriebene Netzabschlussgerät (Fig.2) implementieren, welches dadurch zu einer Antwortstation AE zur Durchführung des Verfahrens wird. Das Verfahren läuft wie folgt ab:

Auf Veranlassung des Bedieners baut die Prüfstation PE1 eine normale Kommunikationsverbindung über das Vermittlungsnetz SN beispielsweise zur Antwortstation AE1 mit dem Endgerät TE1 (Fig.1) auf, dessen Anschluss überwacht und geprüft werden soll. Nach dem Zustandekommen der Verbindung zwischen der Prüfstation PE1 und der Antwortstation AE1 setzt die Prüfstation PE1 den Befehl "Überwachen" ab. Dieser Befehl gelangt auf dem D-Kanal (Signalisierkanal) oder auf einem B-Kanal (Nutzdatenkanal) zur Kommunikationssteuerung ICC und von dort über den Prozessorbus PB zum Prozessor MC in der Antwonstation AE1. Der Prozessor MC interpretiert den Befehl und prüft zudem, ob die Prüfstation PE1 berechtigt ist, einen solchen Befehl zu erteilen. Gegebenenfalls erteilt der Prozessor MC der Kommunikationssteuerung ICC den Auftrag, in der Antwortstation AE1 die Funktion "Überwachen" zu aktivieren.

Entsprechend dieser Funktion fügt der Kommunikationsprozessor ICC nun alle weiteren auf dem D-Kanal erkannten kommenden und gehenden Signalisierinformationen in den zur Prüfstation PE1 führenden D-Kanal ein. Die Signalisierinformationen werden vor ihrer Weiterleitung an die Prüfstation PE1 vom Prozessor MC soweit nötig in eine für die gesicherte Kommunikation (Bildung von Checksummen, Rahmensynchronisation etc.) mit der Prüfstation PE1 geeignete Form gebracht.

Die Antwortstation AE1 befindet sich somit in einem Überwachungszustand, in welchem sie alle beim Auf- oder Abbau einer von ihrem Anschluss abgehenden bzw. an ihrem Anschluss ankommenden Verbindung (z.B. vom Endgerät TE1 zum Endgerät TE2) auf dem D-Kanal ausgetauschten (ankommend und abgehend) übertragenen Signalisierinformationen der Prüfstation PE1 zuleitet. Auch die während dem Bestehen der Verbindung zwischen den Endgeräten TE1 und TE2 auf dem zugehörigen D-Kanal ausgetauschten Informationen, wie Taxinformationen etc, werden auf diese Weise der Prüfstation PE1 zugeleitet. Die Antwortstation AE1 "spiegelt" im Überwachungszustand sozusagen die D-Kanalinformationen zur Prüfstation PE1.

Die Prüfstation PE1 empfängt die ihr auf dem D-Kanal zugeleiteten Informationen, überprüft deren Syntax und Semantik und speichert sie. Aus der empfangenen Information (Layer 3-Information) erstellt die Prüfstation PE1 ein Protokoll und bringt dieses in eine Form, die für eine verständliche Visualisierung geeignet ist. Die Informationen können dann in dieser Form auf einem Bildschirm angezeigt und/oder ausgedruckt werden und stehen so dem Bedien- oder Wartungspersonal des Netzbetreibers in einer unmittelbar interpretierbaren Form in der Prüfstation PE1 zur Verfügung.

Dadurch dass die D-Kanalinformationen der Prüfstation PE1 wie beschrieben auf dem D-Kanal zugeleitet werden, behindert die Überwachung und Prüfung eines Anschlusses den betreffenden Teilnehmer nicht, da die beiden B-Kanäle seines Anschlusses uneingeschränkt zur Verfügung stehen. In einer Variante des beschriebenen Verfahrens kann jedoch auch vorgesehen werden, dass der Kommunikationsprozessor ICC im Überwachungszustand der Antwortstation AE1 alle auf dem D-Kanal erkannten kommenden und gehenden Signalisierinformationen (Layer 2 und 3) zunächst einem Spelcher zuführt. Die gespeicherten Informationen können dann zu einem beliebigen späteren Zeitpunkt von der Prüfstation PE1 abgerufen und statt im D-Kanal in einem der beiden zur Prüfstation PE1 führenden B-Kanäle der Prüfstation PE1 zugeleitet werden, wo sie dann wie beschrieben aufbereitet werden.

Sobald die Antwortstation AE1 wie beschrieben in den Überwachungszustand gelangt ist, bestehen zwei Möglichkeiten:
Der Bediener an der Prüfstation PE1 erteilt dem Teilnehmer am Endgerät TE1 den Auftrag, von seinem Endgerät TE1 aus eine Verbindung zu einem anderen Endgerät, z.B. dem Endgerät TE2 aufzubauen, worauf in der Prüfstation PE1 die Überwachung der D-Kanal-Signalisierung wie oben beschrieben erfolgt. Es ist aber auch denkbar, die sich im Überwachungszustand befindliche Antwortstation AE1 während einer bestimmten Zeit in diesem zu belassen. Auf diese Weise kann ein zufälliger, d.h. ohne ausdrückliche Aufforderung des Teilnehmers am Endgerät TE1 eingeleiteter Aufbau einer Verbindung vom Endgerät TE1 zu einem anderen Endgerät oder umgekehrt überwacht und bezüglich korrektem Ablauf überprüft werden. Die Antwortstation AE1 "beobachtet" somit während einer frei wählbaren Zeitspanne einen allfälligen Austausch von Signalisierzeichen auf dem D-Kanal und meldet seine Beobachtungen wie oben beschrieben laufend oder zu einem späteren Zeitpunkt an die Prüfstation PE1 zurück.

Mit dem beschriebenen Verfahren ermöglicht die Prüfstation PE1 eine Real Time-Überwachung der D-Kanal-Signalisierung an einem Netzanschluss. Da gemäss ITU-T-Empfehlung Q.931 alle Nachrichten (Messages) und deren Austausch für die Signalisierung im D-Kanal festgelegt sind, können mit dem erfindungsgemassen Vorgehen sehr rasch und netzübergreifend von einer zentralen Stelle aus wichtige Aussagen über das Verhalten beliebiger Anschlüsse eines an sich beliebig grossen Fernmeldenetzes gemacht werden. Nach der Analyse des in der Prüfstation PE1 verfügbaren Protokolls lassen sich dann z.B. Ursachen für gemeldete Fehler am betreffenden Netzanschluss ermitteln und die Fehler können rasch behoben werden. Einzige Bedingung ist, dass die betreffenden Anschlüsse mit einer Antwortstation AE ausgerüstet sind, in der die beschriebene Punktion "Überwachen" implementiert ist.

Die Überwachung erlaubt dem Netzbetreiber auch, Aussagen eines Benutzers über Fehlverhalten seines Anschlusses zu verifizieren und erforderlichenfalls schnell entsprechende Massnahmen einzuleiten. Die Prüfstation PE1 kann im einfachsten Fall mit einem Personalcomputer realisiert werden, der wie ein Endgerät an das ISDN-Femmetdenetz angeschlossen wird.

Da die Prüfstation PE1 an jedem digitalen Anschluss eines beliebig ausgedehnten ISDN-Netzes betrieben werden kann, ist das Wartungspersonal in der Lage, praktisch ortsunabhängig dem Benutzer einen effizienten Support zu leisten. Der Netzbetreiber kann sehr rasch und kostengünstig auf Wünsche und Forderungen seiner Kunden eingehen.

In einer weiteren Ausführungsform der Erfindung kann die Prüfstation PE1, nachdem die Antwortstation AE1 in den Überwachungszustand gelangt ist, der Antwortstation AE1 auf dem D-Kanal bestimmte Signalisierinformationen übermitteln und die Antwortstation AE1 dadurch veranlassen, automatisch und gezielt eine Verbindung zu einem anderen Endgerät des Fernmeldenetzes SN aufzubauen. Die Kommunikationssteuerung ICC in der Antwortstation AE1 sorgt dann dafür, dass die zwischen den beiden an der Verbindung beteiligten Endgeräten Ober den D-Kanal ausgetauschten Signalisierinformationen in beschriebener Weise der Prüfstation PE1 zugeleitet werden. Die Prüfstation PE1 kann wiederum überprüfen, ob die gewünschte Verbindung ordnungsgemäss aufgebaut wird. Auf diese Weise lässt sich von der Prüfstation PE1 aus ein Netzanschluss gezielt stimulieren und überwachen, ob der Anschluss entsprechend reagiert.

Der Überwachungszustand der Antwortstation AE1 bleibt solange bestehen, bis er von der Prüfstation PE1 aufgehoben wird.

## Patentansprüche

1. Verfahren zum Überwachen und Prüfen von Teilnehmeranschlüssen eines ISDN-Femmeidenetzes, wobei mindestens eine an einen beliebigen Teilnehmeranschluss des Fernmeldenetzes anschliessbare Prüfstation (PE1) vorgesehen ist, die mit anderen Teilnehmeranschlüssen des Fernemeidenetzes verbindbar ist, und wobei jeder von der Prüfstation (PE1) aus zu prüfende Teilnehmeranschluss mit einer Antwortstation (AE1) ausgerüstet ist, die von der Prüfstation (PE1) Meldungen entgegennehmen bzw. an diese abgeben kann,
**dadurch gekennzeichnet, dass**
die Prüfstation (PE1) über das Fernmeldenetz eine Verbindung zu dem zu prüfenden Teilnehmeranschluss aufbaut und hierauf die zugehörige Antwortstation (AE1) in einen Überwachungszustand versetzt wird, in welchem die auf dem dem betreffenden Anschluss zugeordneten D-Kanal an die Antwortstation (AE1) übermittelten Signalisierinformationen an die Prüfstation (PE1) gespiegelt werden.

2. Verfahren nach Anspruch 1,
**dadurch gekennzeichnet, dass**
über die Prüfstation (PE1) der Antwortstation (AE) im Überwachungszustand die Meldung zum Aufbau einer Verbindung zu einem anderen Teilnehmeranschluss erteilt wird.

3. Verfahren nach Anspruch 1 oder 2,
**dadurch gekennzeichnet, dass**
die Meldung für das Versetzen der Antwortstation (AE1) in den Überwachungszustand auf dem D-Kanal übermittelt wird.

4. Verfahren nach Anspruch 1 oder 2,
**dadurch gekennzeichnet, dass**
die Meldung für das Versetzen der Antwortstation (AE1) in den Überwachungszustand auf dem B-Kanal übermittelt wird.

5. Verfahren nach einem der Ansprüche 1 bis 4,
**dadurch gekennzeichnet, dass**
die Antwortstation (AE) in einem dem betreffenden Teilnehmeranschluss zugeordneten Netzabschlussgerät integriert ist.

6. Verfahren nach einem der Ansprüche 1 bis 5,
**dadurch gekennzeichnet, dass**
die in der Prüfstation (PE1) eintreffenden Signalisierinformationen dort ausgewertet werden.

## Claims

1. Method for monitoring and testing subscriber lines in an ISDN telecommunication network, at least one test station (PE1) being provided that can be linked to any subscriber line in the telecommunication network and that can be connected to other subscriber lines in the telecommunication network, each subscriber line to be tested from the test station (PE1) being equipped with an answer station (AE1) which can receive messages from the test station (PE1) and send messages thereto,
**characterised in that**
the test station (PE1) sets up a connection to the subscriber line to be tested via the telecommunication network, thereupon transferring the associated answer station (AE1) to a monitoring state, in which the signalling information transmitted to the answer station (AE1) on the D-channel assigned to the relevant line is mirrored to the test station (PE1).

2. Method according to Claim 1,
**characterised in that**
the message to set up a connection to another subscriber line is issued via the test station (PE1) to the answer station (AE) in the monitoring state.

3. Method according to Claim 1 or 2
**characterised in that**
the message to transfer the answer station (AE1) to the monitoring state is transmitted on the D-channel.

4. Method according to Claim 1 or 2
**characterised in that**
the message to transfer the answer station (AE1) to the monitoring state is transmitted on the B-channel.

5. Method according to one of Claims 1 to 4
**characterised in that**
the answer station (AE) is integrated into a network terminal device assigned to the respective subscriber line.

6. Method according to one of Claims 1 to 5
**characterised in that**
the signalling information arriving in the test station (PE1) is evaluated there.

## Revendications

1. Procédé de contrôle et de vérification de raccordements d'abonné d'un réseau (RNIS) de télécommunication, dans lequel on prévoit au moins un poste (PE1) de vérification, pouvant être raccordé à n'importe quel raccordement d'abonné du réseau de télécommunication et pouvant être relié aux autres raccordements d'abonné du réseau de télécommunication, et dans lequel, on équipe chaque raccordement d'abonné, à vérifier par le poste (PE1) de vérification, d'un poste (AE1) de réponse, qui peut recevoir des messages du poste (PE1) de vérification et qui peut lui en envoyer,
**caractérisé en ce que**
le poste (PE1) de vérification établit par le réseau de télécommunication une liaison avec le raccordement d'abonné à vérifier et ensuite met le poste (AE1) de réponse associé dans un état de contrôle dans lequel les informations de signalisation transmises au poste (AE1) de réponse sur le canal D associé au raccordement concerné sont renvoyées au poste (PE1) de vérification.

2. Procédé suivant la revendication 1,
**caractérisé en ce que**
l'on délivre par l'intermédiaire du poste (PE1) de vérification au poste (AE) de réponse à l'état de contrôle le message pour l'établissement d'une liaison avec un autre raccordement d'abonné.

3. Procédé suivant la revendication 1 ou 2,
**caractérisé en ce que**
l'on transmet le message pour la mise du poste (AE1) de réponse à l'état de contrôle sur le canal D.

4. Procédé suivant la revendication 1 ou 2,
**caractérisé en ce que**
l'on transmet le message pour la mise du poste (AE1) de réponse dans l'état de contrôle sur le canal B.

5. Procédé suivant l'une des revendications 1 à 4,
**caractérisé en ce que**
l'on intègre le poste (AE) de réponse dans un appareil terminal sur réseau associé au raccordement d'abonné concerné.

6. Procédé suivant l'une des revendications 1 à 5,
**caractérisé en ce que**
l'on exploite dans le poste (PE1) de vérification les informations de signalisation qui y entrent.
